# EUROPEAN PATENT APPLICATION

(11) **EP 0 580 248 A1**
(43) Date of publication of application: **26.01.1994**
(21) Application number: 93202134.8
(22) Date of filing: 20.07.1993
(51) Int. Cl.: A01D 46/20

(54) **Method and device for working a tree**

(30) Priority: 20.07.1992 NL 9201299
(71) Applicant: El Hwaik, Mustafa Abduallah, Misurata (LY)
(72) Inventor: El Hwaik, Mustafa Abduallah, Misurata (LY)
(74) Representative: Bartelds, Erik

(57) **Abstract**

The invention relates to a method for working a tree (41), like e.g. a date palm by mechanically mounting the tree to a desired working level, performing the required work, and mechanically descending from the working level. The tools to be used may also be mechanically lifted and lowered.

The invention further relates to a device (1) for carrying out this method, comprising a frame (2), a carrier (3) that is vertically moveable, and drive means (4) connected thereto.

The frame may include a base (5) and a telescoping tower (6) pivotly mounted thereon.

## Description

The present invention relates to a method for working a tree like e.g. a date palm, comprising the steps of: i) mounting the tree to a desired working level; ii) performing the required work; and iii) descending from the working level, and to a device for performing this method.

Traditionally, trees, and more specifically date palms have been worked by climbing the tree, carrying along the necessary tools, then performing the necessary operations, like lopping branches, picking fruit etc., and finally descending from the tree. In case the operations required heavy or cumbersome tools, these tools were hoisted up after the worker had reached the working level, and were lowered after use. When the work involved picking fruit, the fruit was conventionally dropped from the tree, to be reaped afterwards.

The known method of working trees has several drawbacks. Climbing a tree and clinging thereto when working is dangerous, and over the years a substantial number of workers has fallen from trees, leading to disability or even death. Furthermore, productivity of the workers in the trees is limited, as part of their attention has to be focussed on keeping their balance. Besides, the technique of dropping the fruit from the tree results in the fruit being bruised, leading to reduced yields.

The present invention has for its object to provide a method for working a tree with which the above drawbacks are obviated. According to the invention, this is accomplished in that the steps of i) mounting and iii) descending are performed mechanically. Not only does this reduce the accident rate, but it also reduces mounting and descending times, thus increasing productivity.

Preferably, the method includes the steps of: ia) mechanically lifting at least one tool to be used from the ground to the working level; and iia) mechanically lowering the at least one tool from the working level to the ground. Thus, heavy and cumbersome tools may be used without an undue burden for the worker.

Substantial time savings may further be incurred, when in accordance with a preferred method according to the invention, the steps of: i) mounting and iii) descending the tree are performed simultaneously with the steps of ia) lifting and iia) lowering the at least one tool, respectively.

According to the invention, there is further provided a device for carrying out the method described above. According to a preferred embodiment, such a device includes a frame, at least one moveable carrier, and drive means, the carrier being drivenly connected to the drive means and being moveable in a substantially vertical direction when in use. Workers may sit or stand on the carrier, and be lifted or lowered to and from the desired working level quickly and safely.

In a preferred embodiment, the device includes emergency brake means for immobilizing the carrier in case of a failure of the drive means, thus further lowering the accident rate.

In order to make the device easily transportable, the frame includes a base and a tower arranged on the base for movement between a transport position and a working position in which it extends substantially vertically from the base. The device may thus be moved very close to a tree, after which the tower is erected along the trunk of the tree.

In order to maneuver the tower close to the tree, the tower is preferably arranged on a carriage which is slideably mounted on the base. A relatively simple and durable structure is achieved, when the tower is pivotally mounted on the carriage. In order to achieve a compact construction, the tower preferably comprises a plurality of mutually telescopically connected parts.

When the device is used for working a tree with a relatively long, straight and bare trunk, like a date palm, the carrier may include guide means that are moveable between a closed position and a deployed position. In this way the carrier may be guided along the trunk. In this embodiment, the emergency brake means are preferably moveably mounted on the guide means, and are biased towards the trunk of the tree when in use.

In order to be easily transportable, the base of the device includes at least one axle bearing transport wheels.

Further features and advantages of the method and device according to the invention will be elucidated in the following description, with reference to the appended drawings, in which:
fig. 1 is a partially cut-away perspective view of a first embodiment of the device according to the invention;
fig. 2 is a perspective sectional detail view along the line II-II in fig 1;
fig. 3 is a side view of the device of fig. 1, indicating the pivotal movement of the tower thereof;
fig. 4 is a side view of the device with the tower in its fully extended working position;
fig. 5 is a partially cut-away perspective view of the mechanism for pivoting and extending the tower and raising and lowering the carrier;
fig. 6 is a partially cut-away perspective bottom view of the carrier with the guide means in a deployed position, prior to surrounding the trunk of a tree; and
fig. 7 is a partially cut-away perspective top view of the carrier with the guide means in its closed position surrounding the trunk.

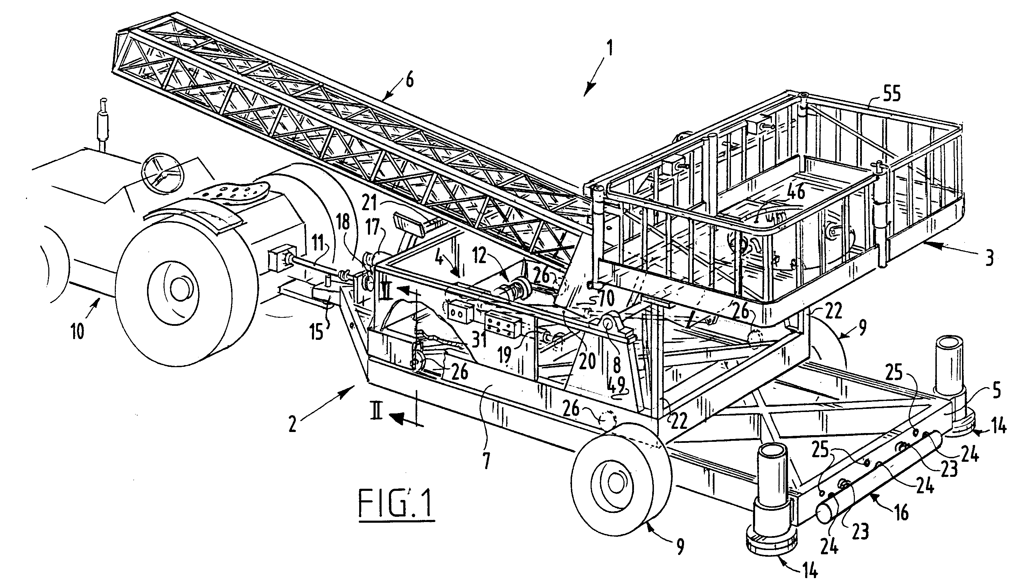

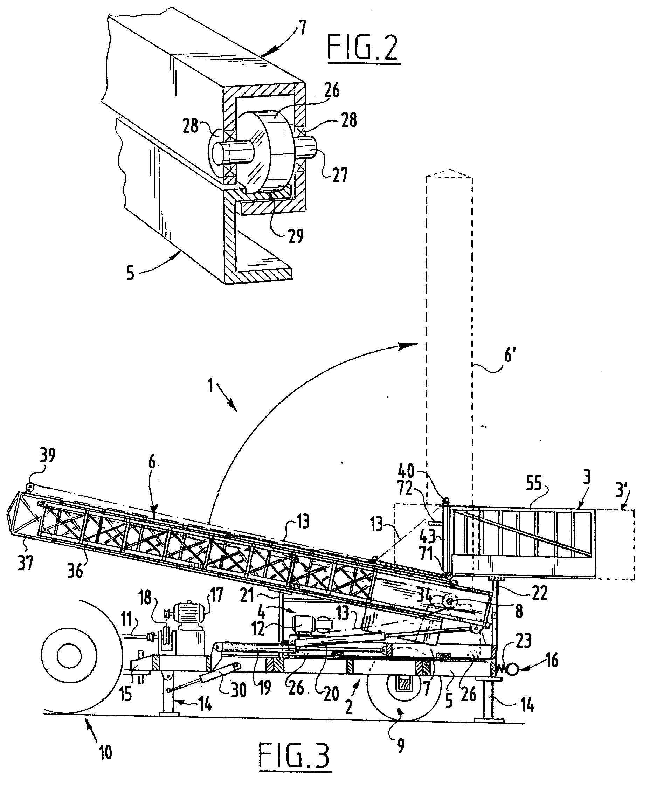

A device 1 for working a tree (fig. 1) comprises a frame 2, a moveable carrier 3 and drive means 4. The frame 2 includes a base 5 and a tower 6. The tower 6 is pivotally mounted on a carriage 7 by means of a pivot shaft 8, and the carriage 7 is slidably mounted on the base 5 by means of rollers 26, the axes 27 of which are rotatably mounted in the carriage 7 through bearings 28 (fig. 2), and which run in grooves 29 in the base 5. The device 1 further includes transport wheels 9 rotatably mounted on the frame 2. The device 1 also includes a drawbar 15, which can be coupled to a tractor 10, from which the device 1 derives its required power through a power take-off shaft 11. The power take-off shaft 11 is connected to a generator 17, which supplies the electrical energy needed for operating the device 1. In case the rotational speed of the take-off shaft 11 does not match the generator's requirements, a reduction transmission 18 may be arranged between the shaft 11 and the generator 17. This transmission may e.g. be a belt or chain drive having pulleys with different diameters, or a gear set. Alternatively, the device 1 may be provided with a power source of its own, to enable it to operate independently. Furthermore, the generator 17 may be provided with an external power outlet, allowing the device 1 to be used as a normal electric generator during the off-season.

The drive means 4 include an electrical winch 12, acting on a cable 13 (not shown) which runs through the tower 6 to the carrier 3.

The frame 2 includes three extendable supports 14 arranged adjacent its rear corners and adjacent its drawbar 15, respectively (fig. 3). At the rear of the frame 2, a bumper-like position sensing device 16 is arranged. The position sensing device 16 is moveably mounted on the base 5 through resilient mounting means 23, and has three contacts 24 which upon movement of the device 16 toward the base 5 activate respective base mounted switches 25, which in turn are connected to a display on the tractor 10.

The device 1 further includes a first hydraulic jack 19, arranged between the base 5 and the carriage 7, for slidably moving the carriage 7 with respect to the base 5, and a second hydraulic jack 20, arranged between the carriage 7 and the tower 6, for pivoting the tower 6 around the shaft 8. The hydraulic system feeding the jacks 19, 20 is powered by the generator 17.

During transport of the device 1, the tower 6 and the carrier 3 rest on forward and aft supports 21, 22, which are fixed on the carriage 7. The carriage 7 is in its forward position, in order to limit the amount of overhang. After reaching a tree, the tractor 10 is backed up until the position sensing device 16 touches the tree and is depressed, thus closing the contact pairs 24,25 and generating a signal on the tractor-mounted display. The circuitry leading from the contact pairs 24,25 to the display may be arranged such, that the display indicates the sequence of closing of the left, middle and right contact pairs, thus allowing the operator to accurately judge the position of the device 1 with respect to the tree.

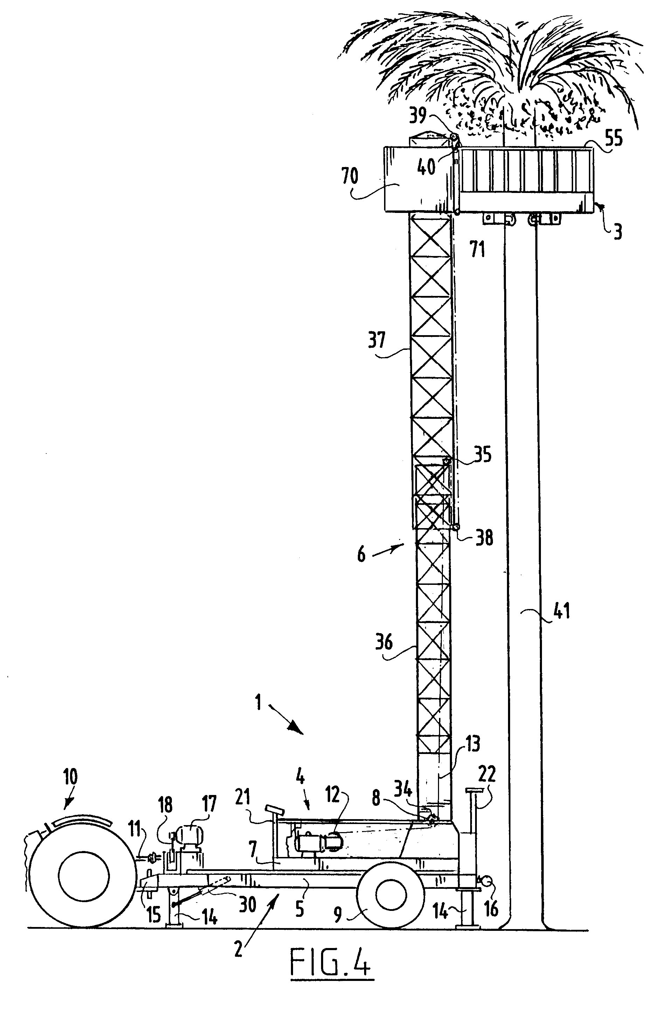

After the device 1 has been parked under the tree, the supports 14 are extended. The supports 14 may be hydraulically extendable, e.g. through a jack 30 (fig. 3) actuated by the operator through a control panel 31. Alternatively, the supports 14 may be manually operated screw-type spindles. When the device 1 is firmly supported, the tower 6 is erected by actuating the second hydraulic jack 20, and pivoting the tower 6 about its shaft 8. After the tower 6 has reached the desired angular position, substantially parallel to the tree trunk, the first hydraulic jack 19 is actuated, moving the carriage 7 from its forward transport position (fig. 1) to a further aft working position (figs. 3 and 4). In this manner, the erect tower 6 may be accurately maneuvered into a position adjacent the tree without the need of maneuvering the entire device 1. The actuation of the jacks 19,20 is also effected from the control panel 31. Instead of the hydraulic jacks 19,20 all other sorts of actuating mechanisms may be used, like e.g. cables and winches or a gear set.

For even more accurate positioning of the tower 6, it may be slidably arranged on the pivot shaft 8, the amount of sliding sideways movement being limited by the cheeks 49 in which the shaft 8 is rotatably supported. In this case the second hydraulic jack 20 will be connected to the frame 2 and the tower 6 by means of spherical joints. The position of the tower 6 may be further adjusted by raising or lowering the left or right support 14, thus rotating the entire frame 2 about its longitudinal axis.

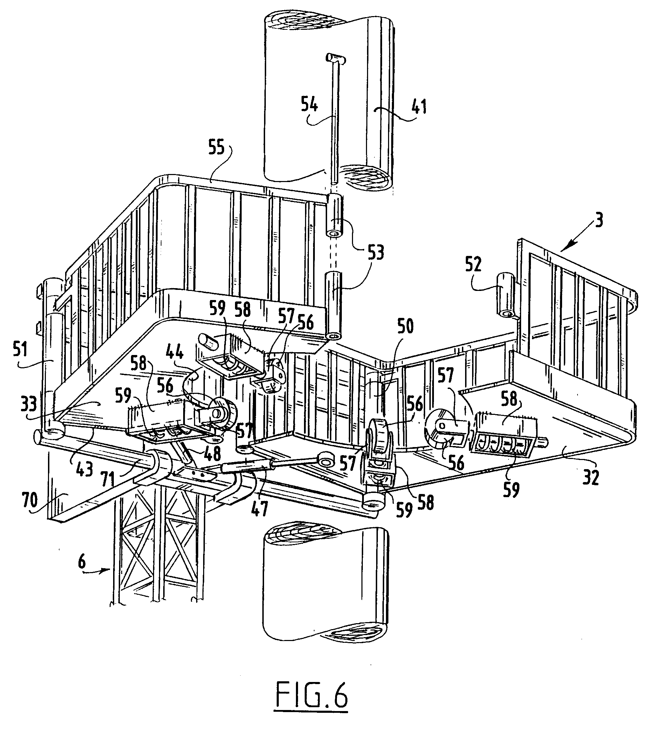

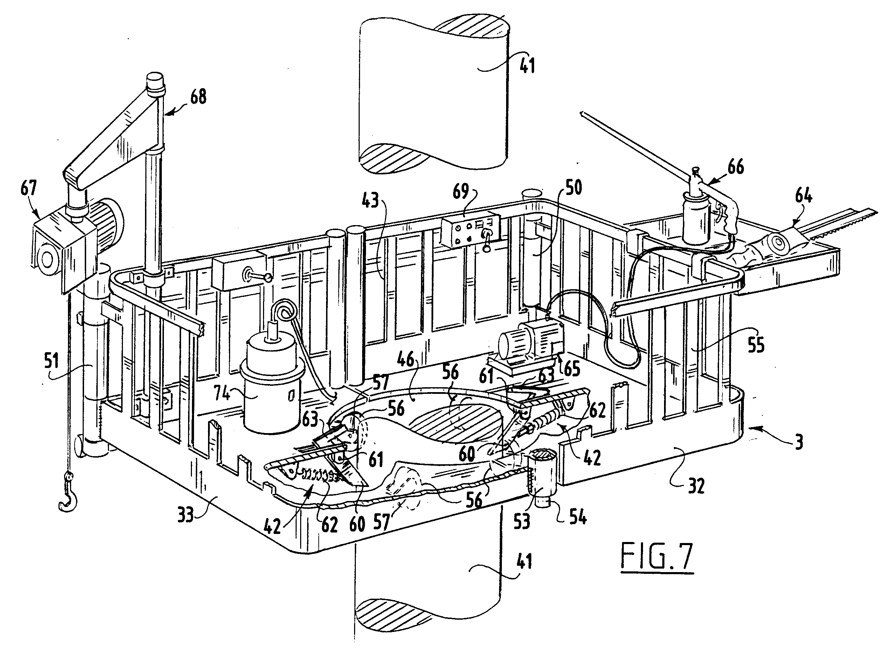

The tower 6 will be erected to a substantially vertical position 6', in which it extends generally parallel to the trunk of the tree to be worked. In order to enable the device 1 to be used with trees which have grown askew, the tower 6 may be pivoted beyond its vertical position, to a position about 10° to the right (in the drawing of fig. 3). Upon erecting the tower 6, the carrier 3 will be moved towards the tower, either by means of cable 13, or through a dedicated hydraulic jack (not shown). Subsequently, the carrier 3 is brought into its deployed position (fig. 6), before the carriage 7 is slid to its aft working position, to allow pivotally connected carrier halves 32,33 to move around the trunk of the tree. After the carriage 7 has reached its desired position, the carrier halves 32,33 may be closed around the tree-trunk (fig. 7). The opening angle of the carrier halves 32,33 should preferably not exceed 30°, in order to prevent the tree trunk from getting stuck between the carrier halves 32,33.

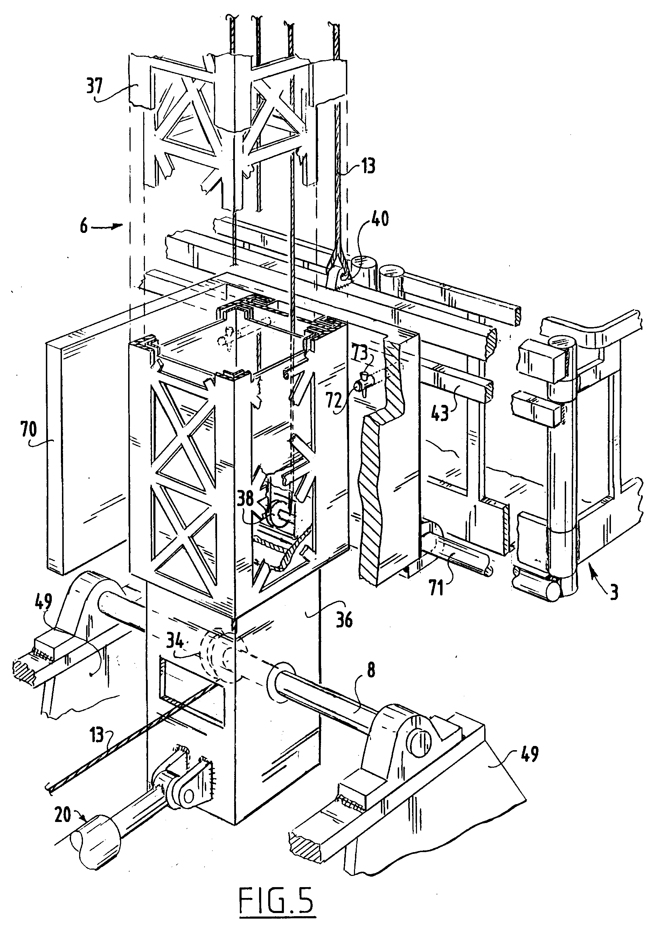

The carrier 3 may subsequently be raised by actuating the electric winch 12, and hauling in the cable 13. The cable 13 runs from the winch 12 over a first pulley 34 rotatably mounted on the pivot shaft 8 (fig. 5) to a second pulley 35 rotatably mounted at the top of the tower 6, and thence to the carrier 3.

Alternatively, the tower 6 may comprise a lower part 36 and an upper part 37 telescopically mounted thereon. In this case, the second pulley 35 is rotatably mounted at the top of the lower part 36, and the cable 13 runs from the second pulley 35 to a third pulley 38 rotatably mounted at the base of the upper part 37, from which it runs to a fourth pulley 39 rotatably mounted at the top of the upper part 37, and thence to an attachment point 40 on the carrier 3. When the cable 13 is hauled in, the carrier 3, which is lighter than the upper part 37 of the tower 6, will first be moved towards the top of the upper part 37, until the attachment point 40 reaches the fourth pulley 39. Upon continued hauling in of the cable 13, the third pulley 38 will subsequently start to move towards the second pulley 35, thus raising the telescoping upper part 37 along the lower part 36.

Although for normal use two tower parts 36,37 will usually be sufficient, it is conceivable that the tower 6 will comprise three or more telescoping parts when the device 1 is used for working extremely tall trees. Furthermore, instead of by the common cable 13, the telescoping parts 36,37 may also be moved by a separate cable, thus rendering the movement of the tower parts 36,37 and that of the carrier 3 independently controllable. Also, the tower parts 36,37 could be moved with respect to each other by other means, such as e.g. hydraulic jacks or a rack and pinion drive.

As soon as the carrier 3 reaches the desired working level along the tree trunk 41, the winch 12 is stopped. To prevent the carrier 3 from dropping to the ground when a malfunction occurs in the winch 12, it is equipped with emergency brake means 42, which will be described in more detail below.

As indicated above, the carrier 3 comprises two halves 32,33, which are suspended from a back plate 43 (figs. 6,7) at vertical pivot joints 50,51. The backplate 43 is itself attached to a U-shaped guide member 70 by means of a horizontal pivot joint 71, and may be fixed thereto by safety arms 72, secured by safety pins 73 (fig. 5). The additionally U-shaped guide member 70 is slidably mounted on the tower 6. Each carrier half 32,33 has a substantially semi-cylindrical cut-out 44,45 along its inner edge. Thus, in the closed position the carrier 3 has a cylindrical opening 46 in its centre for accommodating the tree trunk 41 and for guiding the carrier along the trunk 41. Hydraulic jacks 47,48 are arranged between the backplate 43 and the carrier halves 32 and 33, respectively, for moving the carrier halves between their deployed and closed positions. Instead of hydraulic jacks other actuating devices may of course also be used. The actuating devices may be dispensed with altogether, in which case the carrier halves 32,33 are preferably so connected as to ensure a symmetrical movement thereof. The carrier halves 32,33 further comprise cooperating locking members 52,53, which may be joined together by a manually operable locking pin 54 when the carrier halves 32,33 are in the closed position. To further increase safety, the carrier 3 includes a barrier 55.

In order to provide a smooth run of the carrier 3 along the tree trunk 41, each carrier half 32,33 includes a plurality of guide wheels 56, which are resiliently mounted at the underside of the carrier 3, in order to accommodate for the surface roughness and varying thickness of the tree trunk 41. Each of the guidewheels 56 is rotatably mounted in a fork 57, which in turn is slidably mounted in a frame 58. The fork 57 is biased towards the center of the carrier (and thus towards the tree trunk 41) by means of a compression spring 59 acting thereon.

The emergency brake means 42 (fig. 7) comprise a set of brake arms 60, spaced in the circumferential direction of the opening 46, and pivotally mounted on the carrier 3 at 61. The tip of each of the emergency brake arms 60 is shaped so as to dig itself into the tree trunk 41 when it touches the trunk 41 during a downward movement of the carrier 3, and to slide along the trunk 41 during an upward movement of the carrier 3 (the device being especially suited for date palms, which have a generally upwardly directed sawtooth-like bark). The tips of the emergency brake arms 60 are biased towards the center of the carrier 3 (and thus towards the trunk 41) by means of respective compression springs 62 mounted between the arms 60 and the underside of the carrier 3. In order to release the emergency brake arms 60 during normal descent of the carrier 3, at least one of the arms 60 is substantially L-shaped, and its upper part forms a pedal 63. Depressing this pedal 63 pivots the L-shaped arm 60 around its axis 61, thus moving the brake tip away from the trunk 41 against the biasing force of the compression spring 62. Through a suitable connecting mechanism (not shown here), the other brake arms 60 are simultaneously moved away from the trunk 41. Alternatively, each brake arm 60 may have its own pedal 63 and be actuated independently. Thus, stepping on one of the pedals 63 inadvertently does not cause the entire emergency brake 42 to be released.

The carrier 3 is preferably connected to the generator 17 through a reel-mounted power line (not shown). Thus, electrical tools may be used for working the tree, such as an electrical saw or sickle 64 for lopping branches, an electrically driven air compressor 65 for driving a pollination spray gun 66 and/or an electric hoist 67 for hoisting tools and supplies and for lowering the picked fruits. Alternatively, the fruits may be collected in a container releasably mounted on the carrier 3. The hoist 67 may be mounted on a swivel arm 68, allowing the hoisting and lowering to be accurately controlled.

The movement of the carrier 3 and/or the tower 6 may also be controlled from a control panel 69 mounted on the carrier 3, thus permitting the device 1 to be used by a single operator, who by simultaneously controlling both the position of the tower 6, and the movement of the carrier 3, may smoothly guide the carrier 3 along the tree trunk 41.

A tank and pump unit 74 arranged on the carrier 3 supplies hydraulic fluid to the hydraulic jacks 47,48 for opening and closing the carrier halves 32,33. Furthermore, the carrier 3 may be provided with lamps (not shown), enabling work to continue after dark.

In order to increase the stability of the device 1, a counterweight may be incorporated in the part of the tower 6 which is located below the pivot shaft 8 when the tower 6 is in its erected position. Also a counterweight may be incorporated in the U-shaped guide member 70.

## Claims

1. A method for working a tree, like e.g. a date palm comprising the steps of:
i) mounting the tree to a desired working level;
ii) performing the required work; and
iii) descending from the working level, **characterized in that** the steps of i) mounting and iii) descending are performed mechanically.

2. The method of claim 1, **characterized by** the steps of:
ia) mechanically lifting at least one tool (64,66) to be used from the ground to the working level; and
iia) mechanically lowering the at least one tool (64,66) from the working level to the ground.

3. The method according to claim 2, **characterized in that** the steps of:
i) mounting and iii) descending the tree are performed simultaneously with the steps of ia) lifting and iia) lowering the at least one tool (64,66), respectively.

4. A device (1) for carrying out the method of any one of the preceding claims.

5. The device (1) of claim 4, **characterized by** a frame (2), at least one moveable carrier (3), and drive means (4), the carrier (3) being driven connected to the drive means (4) and being moveable in a substantially vertical direction when in use.

6. The device (1) of claim 5, **characterized by** emergency brake means (42) for immobilizing the carrier (3) in case of a failure of the drive means (4).

7. The device (1) of claim 5 or 6, **characterized in that** the frame (3) includes a base (5) and a tower (6) arranged on the base (5) for movement between a transport position and a working position in which it extends substantially vertically from the base (5).

8. The device (1) of claim 7, **characterized in that** the tower (6) is arranged on a carriage (7) which is slidably mounted on the base (5).

9. The device (1) of claim 8, **characterized in that** the tower (6) is pivotally mounted on the carriage (7).

10. The device (1) of claim 7,8 or 9, **characterized in that** the tower (6) comprises a plurality of mutually telescopically connected parts (36,37).

11. The device (1) of any one of claims 5-10, **characterized in that** the carrier (3) includes guide means (32,33) that are moveable between a closed position, and a deployed position.

12. The device (1) of claim 11, **characterized in that** the emergency brake means (42) are moveably mounted on the guide means (32,33), and are biased towards the trunk (41) of the tree when in use.

13. The device (1) of any one of claims 7-12, **characterized in that** the base (5) includes at least one axle bearing transport wheels (9).
